# EUROPEAN PATENT APPLICATION

(11) **EP 2 696 484 A2**
(43) Date of publication of application: **12.02.2014**
(21) Application number: 13179334.1
(22) Date of filing: 06.08.2013
(51) Int. Cl.: H02K 7/116, H02K 11/00

(54) **Electric actuator**

(30) Priority: 08.08.2012 JP 2012175919; 13.05.2013 JP 2013101400
(71) Applicant: JTEKT CORPORATION, Osaka-shi Osaka 542-8502 (JP)
(72) Inventor: Yukitake, Yasuhiro, Osaka-shi,, Osaka 542-8502 (JP)
(74) Representative: Winter, Brandl, Fürniss, Hübner, Röss, Kaiser, Polte - Partnerschaft

(57) **Abstract**

An electric actuator includes: an electric motor that includes an output shaft and generates a rotational driving force; shift and select conversion mechanisms that transmit the rotational driving force to a shift select shaft; a transmission shaft that transmits the rotational driving force to the shift and select conversion mechanisms; and a coupling that is provided coaxially with the output shaft and the transmission shaft and connects the output shaft to the transmission shaft so that the output shaft and the transmission shaft are rotatable together. The electric actuator includes a resolver that detects a rotation angle of the output shaft, with regard to the electric motor. A resolver rotor of the resolver is fitted to an outer periphery of a transmission shaft-side cylindrical portion of the coupling.

## Description

### BACKGROUND OF THE INVENTION

### 1. Field of the Invention

This invention relates to an electric actuator including an electric motor as a driving source.

### 2. Description of Related Art

Conventionally, there has been known a gear-shifting apparatus of a mechanical automated manual transmission that is a manual transmission in which gearshift is automatically performed. The gear-shifting apparatus of the mechanical automated manual transmission includes a transmission and an electric actuator. A shift gear and the like are accommodated in the transmission. The electric actuator drives the transmission to shift gears. Japanese Patent Application Publication No. 2012-97803 (JP2012-97803 A) describes an electric actuator that includes an electric motor and so on, and rotates a shift select shaft around its shaft axis by a rotational driving force generated by the electric motor so as to cause a shift lever to perform a shift operation or moves the shift select shaft in an axial direction by the rotational driving force so as to cause the shift lever to perform a select operation.

The electric actuator includes a shift conversion mechanism, a select conversion mechanism, a first electromagnetic clutch, a second electromagnetic clutch, and a first transmission shaft. The shift conversion mechanism converts a rotational driving force from the electric motor to a force for rotating the shift select shaft around the shaft axis. The select conversion mechanism converts the rotational driving force to a force for moving the shift select shaft in the axial direction. The first electromagnetic clutch allows/interrupts transmission of the rotational driving force to the shift conversion mechanism. The second electromagnetic clutch allows/interrupts transmission of the rotational driving force to the select conversion mechanism. The first transmission shaft transmits the rotational driving force to the first electromagnetic clutch and the second electromagnetic clutch.

One end portion of the first transmission shaft is connected to an output shaft of the electric motor so that the first transmission shaft is rotatable together with the output shaft of the electric motor. The other end portion of the first transmission shaft is connected to the first electromagnetic clutch and the second electromagnetic clutch. Accordingly, the rotational driving force from the electric motor is output from the output shaft and transmitted to the first transmission shaft, and then transmitted from the first transmission shaft to the shift conversion mechanism or the select conversion mechanism via the first electromagnetic clutch or the second electromagnetic clutch.

The electric actuator includes an annular resolver rotor and a resolver stator. The resolver rotor is fitted to an outer periphery of the output shaft so as to be rotatable together with the output shaft. The resolver stator surrounds the resolver rotor in a non-contact manner. The electric actuator is accommodated in a motor housing of the electric motor. The resolver rotor is generally disposed closer to a distal end side, that is, closer to a first transmission shaft-side than a motor rotor.

In order to reduce the size of the electric motor, it is necessary to reduce the size of a resolver, more specifically, to reduce to size of the resolver rotor. Further, in order to reduce the size of the resolver rotor, the output shaft fitted to the resolver rotor needs to be made thin. In the electric actuator as described in JP2012-97803 A, in a case where both the output shaft and the transmission shaft are thin, a coupling may be provided between the output shaft and the transmission shaft without directly connecting the transmission shaft to the output shaft. The coupling is fitted and connected to an outer periphery of a distal end portion of the output shaft and an outer periphery of the one end portion of the transmission shaft. In this case, since the output shaft is connected to the transmission shaft via the coupling, an overall dimension of the entire electric actuator becomes large due to the presence of the coupling. Such a problem may occur not only in an electric actuator used for shifting gears, but also in an electric actuator including an electric motor as a driving source.

### SUMMARY OF THE INVENTION

An object of the present invention is to provide an electric actuator configured such that an increase in the size of the electric actuator due to a configuration for transmitting a rotational driving force from an electric motor to a transmission shaft is suppressed.

According to an aspect of the present invention, an electric actuator includes: an electric motor that includes an output shaft, a motor rotor, and a motor stator, the motor rotor including a back yoke and a magnet fitted to an outer peripheral surface of the back yoke, the motor rotor being fitted to an outer periphery of the output shaft, the motor stator surrounding the motor rotor, and the electric motor generating a rotational driving force to output the rotational driving force from the output shaft; a transmission mechanism that transmits the rotational driving force generated by the electric motor to a driving force output portion; a transmission shaft that is provided coaxially with the output shaft, and that transmits the rotational driving force to the transmission mechanism; a shaft joint that includes a cylindrical portion provided coaxially with the output shaft and the transmission shaft, the shaft joint connecting the output shaft to the transmission shaft so that the output shaft and the transmission shaft are rotatable together; and a resolver that includes a resolver rotor fitted to an outer periphery of the cylindrical portion (so that the resolver rotor overlaps with the shaft joint with respect to an axial direction of the output shaft and the transmission shaft), and that detects a rotation angle of the output shaft.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is an exploded perspective view illustrating a schematic configuration of a gear-shifting apparatus in which an electric actuator according to an embodiment of the present invention is provided;
FIG. 2 is a perspective view illustrating a configuration of a transmission actuating device in the gear-shifting apparatus illustrated in FIG. 1;
FIG. 3 is a bottom plan view illustrating the configuration of the transmission actuating device;
FIG. 4 is a sectional view illustrating the configuration of the transmission actuating device;
FIG. 5 is a sectional view taken along a line A-A in FIG. 4;
FIG. 6 is a perspective view illustrating a configuration of a coupling;
FIG. 7 is a sectional view taken along a line B-B in FIG. 4; and
FIG. 8 is a sectional view of a main part, which illustrates a modified example of the present invention.

### DETAILED DESCRIPTION OF EMBODIMENTS

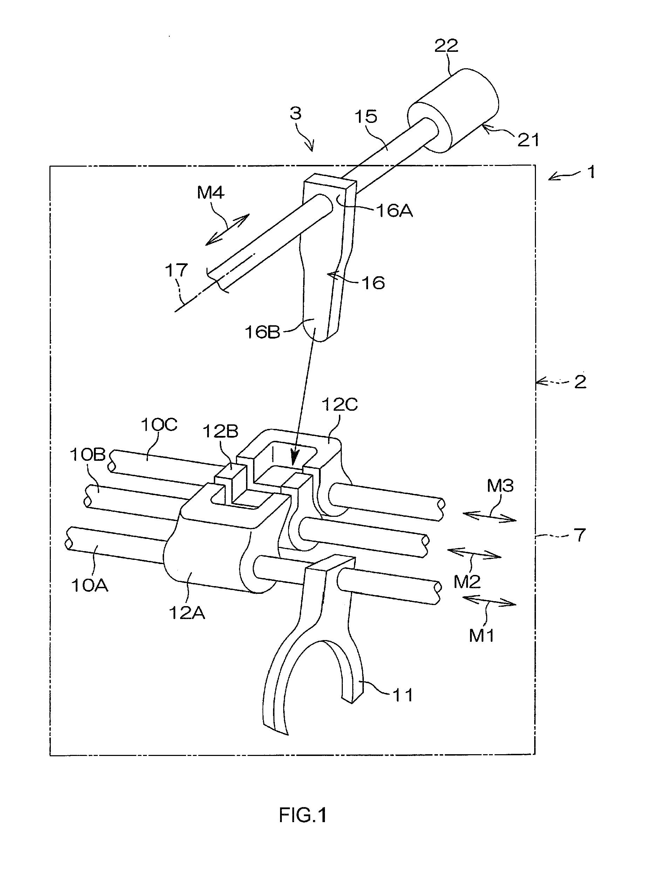

An embodiment of the present invention will be described below with reference to attached drawings. FIG. 1 is an exploded perspective view illustrating a schematic configuration of a gear-shifting apparatus in which an electric actuator 21 according to the embodiment of the present invention is provided. A gear-shifting apparatus 1 includes a transmission 2 and a transmission actuating device 3 that drives the transmission 2 to shift gears. The transmission 2 is a known constant-mesh parallel-shaft gear transmission, and is provided in a vehicle such as a passenger vehicle or a truck. The transmission 2 includes a gear housing 7 and a constant-mesh parallel-shaft gear transmission mechanism (not shown) which is accommodated in the gear housing 7.

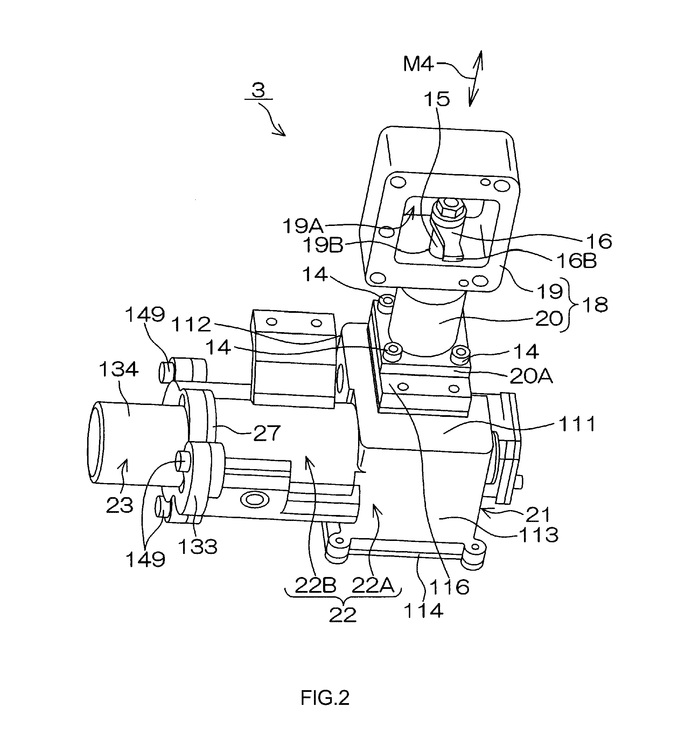

The transmission actuating device 3 includes a shift select shaft 15 and the electric actuator 21. The shift select shaft 15 causes the transmission mechanism (not shown) of the transmission 2 to perform a shift operation or a select operation. The electric actuator 21 is used as a common driving source for causing the shift select shaft (a driving force output portion) 15 to perform the shift operation or the select operation. Note that FIG. 1 is a view illustrating each member in a simplified manner, and a detailed configuration of each member (particularly, the electric actuator 21) is illustrated in FIG. 2 and subsequent drawings described later.

The shift select shaft 15 is a shaft-shaped body extending in a predetermined direction (a direction M4 as illustrated in the figure). One end 16A of a shift lever 16 accommodated in the gear housing 7 is fixed to an intermediate part of the shift select shaft 15. The shift lever 16 rotates around a central axis 17 of the shift select shaft 15, in association with the shift select shaft 15. A distal end side (a right back side illustrated in FIG. 1) of the shift select shaft 15 projects outside the gear housing 7. When the shift select shaft 15 rotates around an axis thereof or moves in the axial direction M4, the shift lever 16 accordingly performs an actual shift operation or select operation. More specifically, the electric actuator 21 rotates the shift select shaft 15 so as to cause the shift lever 16 to perform the shift operation, and slides the shift select shaft 15 so as to cause the shift lever 16 to perform the select operation.

A plurality of shift rods 10A, 10B, and 10C extending in parallel with each other is accommodated in the gear housing 7. Shift blocks 12A, 12B, and 12C engageable with the other end 16B of the shift lever 16 are fixed to the respective shift rods 10A, 10B, and 10C. Further, each of the shift rods 10A, 10B, and 10C is provided with a shift fork 11 engaging with a clutch sleeve (not shown) in the transmission 2. Note that, in FIG. 1, only the shift fork 11 provided in the shift rod 10A is illustrated.

When the electric actuator 21 causes the shift select shaft 15 to move (slide) in the axial direction M4 thereof, the shift lever 16 is moved in the axial direction M4. As a result, the other end 16B of the shift lever 16 selectively engages with one of the shift blocks 12A, 12B, and 12C, and thus, the select operation is achieved. When the electric actuator 21 causes the shift select shaft 15 to rotate around its central axis 17, the shift lever 16 oscillates around the central axis 17. As a result, one of the shift blocks 12A, 12B, and 12C, which engages with the shift lever 16, moves in a corresponding one of axial directions M1, M2, and M3 of the shift rods 10A, 10B, and 10C. Thus, the shift operation is achieved. Note that a necessary rotation angle of the shift select shaft 15 for this shift operation is significantly smaller than 360° (corresponding to one rotation of the shift select shaft 15) (e.g., around 120°).

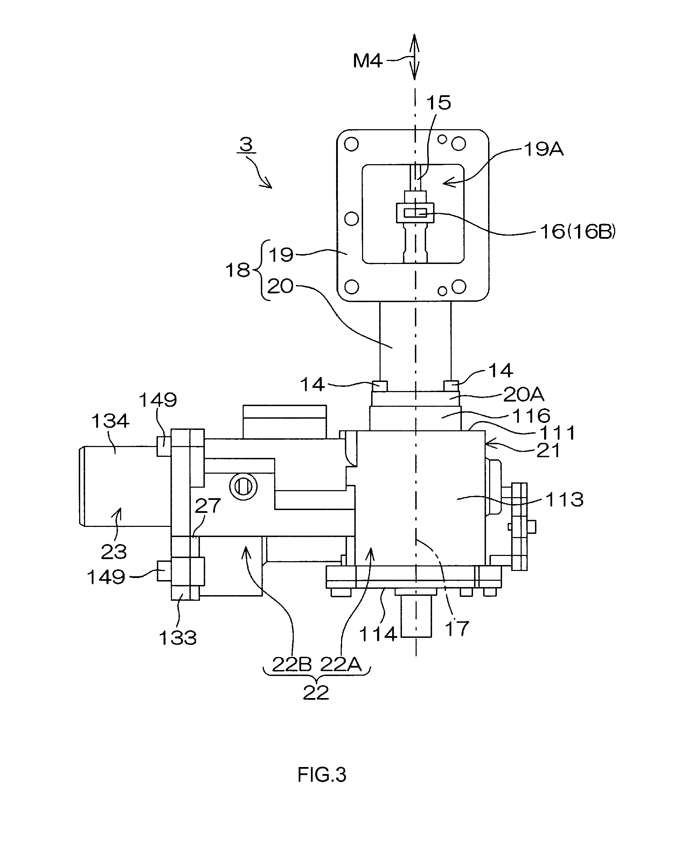

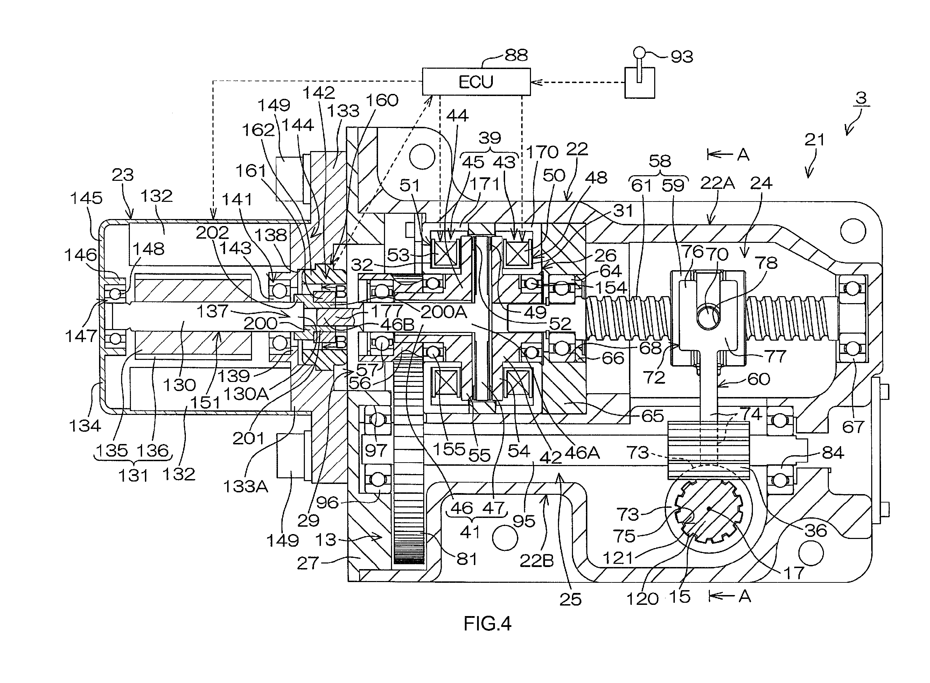

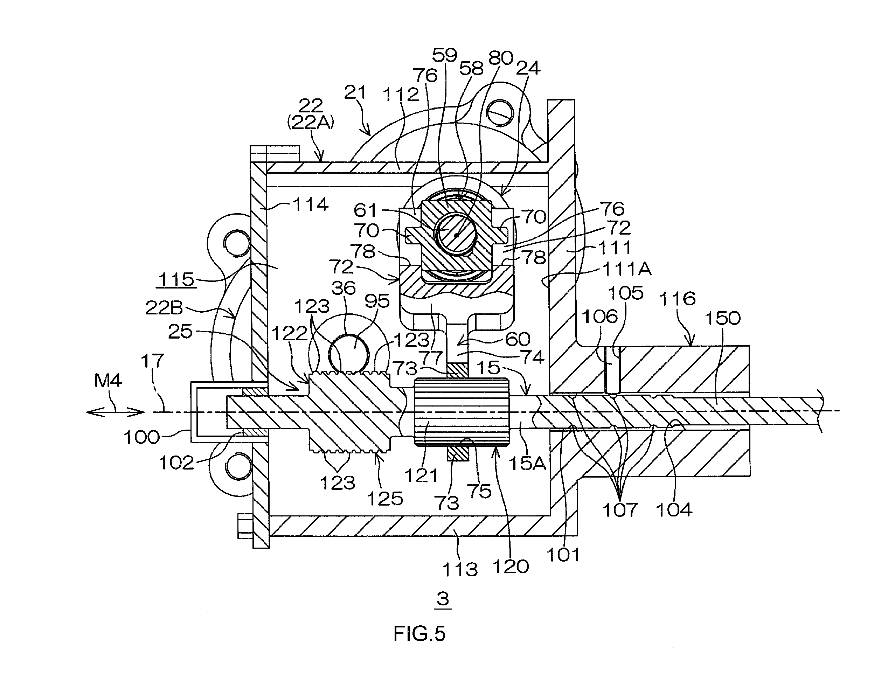

FIG. 2 is a perspective view illustrating a configuration of the transmission actuating device 3 in the gear-shifting apparatus illustrated in FIG. 1. FIG. 3 is a bottom plan view illustrating the configuration of the transmission actuating device 3. FIG. 4 is a sectional view illustrating the configuration of the transmission actuating device 3. FIG. 5 is a sectional view taken along a line A-A in FIG. 4. Hereinafter, the configuration of the transmission actuating device 3, particularly, the electric actuator 21 will be described with reference to FIGS. 2 to 5.

The electric actuator 21 is fixed to an outer surface of the gear housing 7 (see FIG. 1). As illustrated in FIG. 4, the electric actuator 21 includes a box-shaped body housing 22 which forms an outer boundary of the electric actuator 21, and in which the shift select shaft 15 and the like are accommodated. More specifically, the electric actuator 21 includes a fitting stay 18 illustrated in FIG. 2, in addition to the body housing 22. The fitting stay 18 integrally includes a body portion 19 and an extension portion 20.

The body portion 19 has a block shape having a rectangular contour in a plane view (a bottom plan view) (also see FIG. 3). On one side face of the body portion 19, a hollow portion 19A that is recessed and has a rectangular shape in a plan view is formed. The extension portion 20 has a circular tube shape and extends from the body portion 19 toward the body housing 22. A flange portion 20A projecting in a radial direction of the extension portion 20 is provided integrally with a body housing 22-side end portion (a lower end portion in FIG. 3) of the extension portion 20. A contour of the flange portion 20A when viewed in a direction in which the extension portion 20 extends has a substantially rectangular shape. In a state where the flange portion 20A makes contact with the body housing 22, a plurality of common bolts 14 (four bolts in this case) is fitted to the flange portion 20A (four corners) and the body housing 22. Thus, the fitting stay 18 is fixed to the body housing 22.

When viewed in the direction in which the extension portion 20 extends, a circular insertion hole 19B extending through the body portion 19 to communicate with the hollow portion 19A is formed at a part of the body portion 19 which corresponds to a circle center of a hollow portion of the extension portion 20. In FIG. 2, the insertion hole 19B is formed at an extension portion 20-side of the body portion 19. In the fitting stay 18, the body portion 19 is fitted to the gear housing 7 (see FIG. 1) by a bolt (not shown). Thus, the electric actuator 21 (in other words, the entire transmission actuating device 3) is fixed to the outer surface of the gear housing 7. In this state, a shift lever 16-side part of the shift select shaft 15 protrudes outside the body housing 22. The part of the shift select shaft 15 which protrudes outside the body housing 22 is disposed inside the extension portion 20 and inside the hollow portion 19A of the body portion 19. In this state, this part is inserted through the insertion hole 19B of the body portion 19 and is exposed outside from the hollow portion 19A of the body portion 19. The shift lever 16 is disposed in the hollow portion 19A of the body portion 19 and protrudes outside the body housing 22. The other end 16B of the shift lever 16 protrudes outside the body portion 19 from the hollow portion 19A and engages with any of the shift blocks 12A, 12B, and 12C (see FIG. 1) described above.

Referring to FIG. 4, the electric actuator 21 includes an electric motor 23, a shift conversion mechanism 24, a select conversion mechanism 25, and a switching unit 26. As the electric motor 23, a brushless motor is employed, for example. The electric motor 23 includes an output shaft 130, a motor rotor 131, a motor stator 132, a motor housing 133, and a motor case 134.

The output shaft 130 extends in a predetermined direction (in a right-left direction in FIG. 4). The output shaft 130 is connected to a transmission shaft 41 via a coupling 200 (a shaft joint) so as to be rotatable together with the transmission shaft 41. The coupling 200 has a substantially cylindrical shape. The coupling 200 is provided in a posture in which the coupling 200 is coaxial with the output shaft 130 and the transmission shaft 41. The coupling 200 is fitted to an outer periphery of a distal end portion 130A of the output shaft 130 and an outer periphery of a second end portion 46B of the transmission shaft 41.

The motor rotor 131 includes a back yoke 135 and a plurality of magnets 136. The back yoke 135 is a magnetic component for preventing a leak of a magnetic flux in the electric motor 23 and maximizing a magnetic force of the magnet 136. The back yoke 135 is annular and has a predetermined thickness in an axial direction thereof. The magnets 136 are fitted to an outer peripheral surface of the back yoke 135 so that the magnets 136 are arranged in a circumferential direction. The output shaft 130 is inserted through a hollow portion of the back yoke 135, and thus, the motor rotor 131 is fitted to an outer periphery of the output shaft 130 so as to be separable from the output shaft 130 and is rotatable around a shaft axis of the output shaft 130 together with the output shaft 130.

The motor stator 132 is constituted by a coil and the like (not shown). The motor housing 133 has a plate shape extending in a direction (in an up-down direction in FIG. 4) orthogonal to the output shaft 130. A circular insertion hole 137 and an inner peripheral surface 138 having a substantially cylindrical shape are formed in the motor housing 133. The insertion hole 137 extends through the motor housing 133 in a thickness direction (in a direction parallel to the output shaft 130). The inner peripheral surface 138 defines the insertion hole 137. A diameter of the inner peripheral surface 138 is reduced and increased appropriately at a plurality of positions in the axial direction (in a depth direction of the insertion hole 137). A rib 139 projecting into the insertion hole 137 (inwardly in a radial direction of the circular insertion hole 137) is provided on a part of the inner peripheral surface 138, which corresponds to an intermediate part of the insertion hole 137 in the depth direction. The insertion hole 137 is partitioned by the rib 139 into a first space 141 closer to one side (a left side in FIG. 4) than the rib 139, and a second space 142 closer to the other side (a right side in FIG. 4) than the rib 139. An annular rolling bearing 143 is fitted in the first space 141. An outer ring of the rolling bearing 143 is fitted to the inner peripheral surface 138 in the first space 141. A cylindrical stepped portion 133A coaxial with the insertion hole 137 is formed on a first space 141-side side surface (a left side surface in FIG. 4) of the motor housing 133 so that the cylindrical stepped portion 133A projects from the side surface. Further, end portions (upper and lower end portions in FIG. 4) of the motor housing 133 are fixed to the body housing 22 by bolts 149. In other words, the motor housing 133 is removably fitted to the body housing 22 via the bolts 149.

The motor case 134 has a substantially cylindrical shape and has, at one end thereof in the axial direction, an opening 144 from which an inside of the motor case 134 is exposed. A disc portion of the motor case 134 at a side opposite to the opening 144 in the axial direction is a bottom 145 that closes the other end of the motor case 134 in the axial direction. An annular first rib 146 projecting toward the opening 144 is formed at a circle center position of a side surface of the bottom 145 (a right side surface of the bottom 145 in FIG. 4), which faces the inside of the motor case 134. An annular rolling bearing 148 is fitted in a space 147 surrounded by the first rib 146. An outer ring of the rolling bearing 148 is fitted to an inner peripheral surface of the first rib 146. A part of the motor case 134, which serves as a rim of the opening 144, is fitted to an outer periphery of the stepped portion 133A of the motor housing 133, and thus, the motor case 134 is fitted to the motor housing 133. In this state, the rolling bearings 143 and 148 are disposed coaxially. Thus, it is possible to fit the motor case 134 to the body housing 22 via the motor housing 133. Further, the opening 144 of the motor case 134 is closed by the stepped portion 133A of the motor housing 133, thereby preventing foreign substances from entering the motor case 134.

In the electric motor 23, the motor rotor 131 is accommodated in an area between the rolling bearings 143 and 148 inside the motor case 134. Further, the motor stator 132 described above is accommodated in the motor case 134 so as to be fitted to an inner peripheral surface of the motor case 134, and surrounds the motor rotor 131 in a non-contact manner. The output shaft 130 integrated with the motor rotor 131 is inserted through respective hollow portions of the rolling bearings 143 and 148 (in other words, the insertion hole 137 of the motor housing 133 described above and the space 147). Thus, the motor rotor 131 and the output shaft 130 are rotatably supported by the motor housing 133 and the motor case 134 via the rolling bearings 143 and 148. A part of the output shaft 130 is exposed outside the electric motor 23 (i.e., exposed to a right side with respect to the motor housing 133 in FIG. 4) from the insertion hole 137 of the motor housing 133. When electric power is supplied to the electric motor 23 from a power source (not shown), the motor rotor 131 and the output shaft 130 rotate together, and thus, a rotational driving force (rotation torque) is generated. The electric motor 23 outputs the generated rotational driving force from the output shaft 130. Note that the electric motor 23 can rotate in positive and reverse rotational directions.

Further, in relation to the electric motor 23, the electric actuator 21 includes a resolver 160. The resolver 160 is housed in the second space 142 in the insertion hole 137 of the motor housing 133. The resolver 160 includes an annular resolver rotor 161 and a resolver stator 162. The resolver rotor 161 is rotatable together with the output shaft 130. The resolver stator 162 surrounds the resolver rotor 161 in a non-contact manner. The resolver stator 162 is annular, and a coil (not shown) is provided in the resolver stator 162. The resolver stator 162 is fitted in the second space 142 in the insertion hole 137 of the motor housing 133. More specifically, the resolver stator 162 is fitted to the inner peripheral surface 138 in the second space 142. Thus, it is possible to fix a position of the resolver stator 162 by the motor housing 133. The resolver 160 detects a rotation angle of the output shaft 130 based on a voltage change caused when the resolver rotor 161 rotates together with the output shaft 130. As the resolver 160, a small-sized resolver with the resolver rotor 161 having a small inner diameter is employed.

The resolver rotor 161 is fitted to an outer periphery of the coupling 200. More specifically, a transmission shaft-side cylindrical portion (a second cylindrical portion) 201 is formed in an area including a first end portion 200A of the coupling 200 (a transmission shaft-side end portion of the shaft joint), and the resolver rotor 161 is fitted and fixed to an outer periphery of the transmission shaft-side cylindrical portion 201 by press-fitting. The shift conversion mechanism 24 converts the rotational driving force of the electric motor 23 to a force for rotating the shift select shaft 15 around the central axis 17 (around the axis) and transmits the force to the shift select shaft 15. The select conversion mechanism 25 converts the rotational driving force of the electric motor 23 to a force for moving (sliding) the shift select shaft 15 in the axial direction M4 (a direction orthogonal to a plane of paper in FIG. 4) and transmits the force to the shift select shaft 15. The switching unit 26 switches a destination to which the rotational driving force of the electric motor 23 is transmitted, between the shift conversion mechanism 24 and the select conversion mechanism 25. The electric motor 23 is attached from outside to the body housing 22, whereas the shift conversion mechanism 24, the select conversion mechanism 25, and the switching unit 26 are accommodated in the body housing 22.

A motor opening 13 is formed at an electric motor 23-side (the left side in FIG. 4) of the body housing 22. The motor opening 13 is closed by a cover 27 having a substantially plate shape. The cover 27 is part of the body housing 22. Each of the body housing 22 and the cover 27 is formed by using a metallic material such as casting iron or aluminum, and an outer periphery of the cover 27 is fitted to the motor opening 13 of the body housing 22. A circular through hole 29 extending through an inner surface (a right surface in FIG. 4) and an outer surface (a left surface in FIG. 4) of the cover 27 is formed in the cover 27. Further, the motor housing 133 of the electric motor 23 is fixed to the outer surface of the cover 27. The electric motor 23 is fitted so that the motor case 134 and the motor housing 133 are exposed outside the body housing 22. The output shaft 130 of the electric motor 23 is disposed so as to be neither parallel to nor directly intersecting with the shift select shaft 15 such that the output shaft 130 and the shift select shaft 15 form an angle of 90° in a plane view (when viewed from above in FIG. 4). In view of this, the output shaft 130 extends along a predetermined direction (the right-left direction in FIG. 4) orthogonal to the axial direction M4. The output shaft 130 (a portion protruding from the electric motor 23) faces an inside of the body housing 22 via the through hole 29 of the cover 27 and is opposed to the switching unit 26.

The body housing 22 has a box shape as previously described. The body housing 22 mainly accommodates therein a distal end-side area (the right back side area in FIG. 1) of the shift select shaft 15, and component parts, i.e., the shift conversion mechanism 24, the select conversion mechanism 25, and the switching unit 26. More specifically, as illustrated in FIG. 5, the body housing 22 has a box shape having a bottom at a lateral side (at a right side in FIG. 5). The body housing 22 mainly includes a bottom wall 111 and a pair of side walls 112 and 113 extending, in parallel with each other, respectively from one end portion (an upper end portion in FIG. 5) of the bottom wall 111 and the other end portion (a lower end portion in FIG. 5) thereof. In the body housing 22, an opening 115, which is defined by distal end portions (left end portions in FIG. 5) of the side walls 112 and 113, and the like, is formed. The opening 115 is closed by a cover 114 having a flat plate shape. The cover 114 is part of the body housing 22.

As illustrated in FIG. 5, an inner bottom face 111A of the bottom wall 111 is formed by a flat surface. On the bottom wall 111, a shaft holder 116 is formed so as to support an intermediate part of the shift select shaft 15 (the intermediate part being closer to a proximal end (a right end in FIG. 5) than a spline portion 120 and a rack portion 122 to be described later). The shaft holder 116 is formed integrally with the bottom wall 111, and has, for example, a rectangular solid shape protruding outwardly from an outer wall surface (a surface opposite to the bottom face 111A) of the bottom wall 111 (see FIG. 2). The aforementioned flange portion 20A of the fitting stay 18 is fixed to the shaft holder 116 via the bolts 14 (see FIG. 2). In the bottom wall 111 and the shaft holder 116, a (circular) insertion hole 104 having a circular section is formed. The insertion hole 104 extends through the shaft holder 116 and the bottom wall 111 in their thickness direction (a right-left direction in FIG. 5; a direction orthogonal to the bottom face 111A). The shift select shaft 15 is inserted through the insertion hole 104. The insertion hole 104 has a diameter slightly larger than that of the shift select shaft 15 (a portion blocking the insertion hole 104). Thus, a clearance for allowing communication between the inside and outside of the body housing 22 is formed between an inner peripheral surface that defines the insertion hole 104 in the bottom wall 111 and the shaft holder 116, and an outer peripheral surface of the shift select shaft 15.

A plain bearing 101 is fitted and fixed to an inner peripheral surface of the insertion hole 104. The plain bearing 101 surrounds an outer periphery of the intermediate part (a blocking portion 150, which will be described later) of the shift select shaft 15 which is inserted through the insertion hole 104, and supports the outer periphery of the blocking portion 150 of the shift select shaft 15 in a sliding contact manner. A lock pole 106 is disposed in an intermediate part of the shaft holder 116 in its thickness direction (the right-left direction in FIG. 5). More specifically, the lock pole 106 is accommodated in a through-hole 105 extending through the inner peripheral surface of the insertion hole 104 and an outer peripheral surface of the shaft holder 116. The lock pole 106 has a substantially cylindrical shape extending in a direction orthogonal to a central axis of the insertion hole 104 (that is, the central axis 17 of the shift select shaft 15), and is provided so as to be movable along the direction. A distal end portion of the lock pole 106 has a hemispherical shape and engages with an engaging groove 107, which will be described below.

The part of the shift select shaft 15, which just blocks the insertion hole 104 (a part disposed at a position corresponding to the insertion hole 104 in the axial direction M4), is referred to as the blocking portion 150. The blocking portion 150 is a cylindrical body coaxially integrated with the shift select shaft 15 and is disposed at such a position as to block the insertion hole 104. On the outer periphery of the blocking portion 150, a plurality of engaging grooves 107 (e.g., three engaging grooves 107) extending in a circumferential direction is formed at intervals in the axial direction M4. Each of the engaging grooves 107 is formed along the entire circumference of the blocking portion 150. When the lock pole 106 moves in its longitudinal direction, its distal end portion projects to be closer to the central axis 17 (downward in FIG. 5) than the inner peripheral surface of the insertion hole 104 and the distal end portion engages with the engaging groove 107, thereby preventing the shift select shaft 15 from moving in the axial direction M4. Thus, the shift select shaft 15 is maintained with a constant force in a state where its movement in the axial direction M4 is prevented. However, in this state, unexpected movement of the shift select shaft 15 is just prevented. Therefore, even in this state, it is possible to rotate the shift select shaft 15 around the axis thereof and to slide the shift select shaft 15 in the axial direction M4.

As illustrated in FIG. 5, in the part of the shift select shaft 15 closer to a distal end side than the insertion hole 104 (a part of the shift select shaft 15 inside the body housing 22), the spline portion 120, and the rack portion 122 with which an after-mentioned pinion gear 36 meshes are provided in this order from a side close to the insertion hole 104. That is, in the shift select shaft 15, the spline portion 120 and the rack portion 122 are disposed at positions apart from the insertion hole 104 toward the inside of the body housing 22, and particularly, the rack portion 122 is disposed at a position more apart from the insertion hole 104 toward the inside of the body housing 22 than the spline portion 120. Each of the spline portion 120 and the rack portion 122 is a cylindrical body coaxially integrated with the shift select shaft 15, and has a predetermined length in the axial direction. Each of the spline portion 120 and the rack portion 122 has a diameter larger than that of a shaft portion 15A of the shift select shaft 15 (an area of the shift select shaft 15 except the spline portion 120 and the rack portion 122).

On an outer peripheral surface of the spline portion 120, splines 121 (protruding portions having a stripe shape extending axially) are formed over an entire area at intervals in the circumferential direction. On an outer peripheral surface of the rack portion 122, a rack teeth forming area 125 is provided over an entire area in the circumferential direction. In the rack teeth forming area 125, a plurality of rack teeth 123 extends in parallel with each other along the central axis 17 from one end (a left end in FIG. 5) of the rack portion 122 in the axial direction M4 to the other end (a right end in FIG. 5) thereof in the axial direction M4. The rack teeth 123 in the rack teeth forming area 125 mesh with the after-mentioned pinion gear 36.

The part of the shift select shaft 15, which is accommodated in the body housing 22, is supported by the plain bearing 101 in a slide contact manner. Note that a distal end portion (a left end portion in FIG. 5) of the shift select shaft 15, which is opposite to the spline portion 120 across the rack portion 122, extends through the cover 114 of the body housing 22 so as to project outside the body housing 22. A cylindrical cap 100 is fitted to an outer periphery of the distal end portion via an annular plain bearing 102. The shift select shaft 15 is also supported by the plain bearing 102 in a slide contact manner.

As illustrated in FIG. 4, the switching unit 26 includes the transmission shaft 41, a first rotor 42, a second rotor 44, and a clutch mechanism 39. The transmission shaft 41 is coaxially integrated with the output shaft 130 of the electric motor 23. The first rotor 42 is an annular rotor provided to be coaxial with the transmission shaft 41 and rotatable in association with the transmission shaft 41. The second rotor 44 is an annular rotor provided to be coaxial with the transmission shaft 41 and rotatable in association with the transmission shaft 41. The clutch mechanism 39 switches the rotor to which the transmission shaft 41 is connected, between the first rotor 42 and the second rotor 44.

The transmission shaft 41 includes a main shaft portion 46 and a large diameter portion 47. The main shaft portion 46 is provided at an electric motor 23-side and has a longitudinal shaft shape that is thin (e.g., 6 mm in diameter) and is continuous with the output shaft 130 of the electric motor 23. The large diameter portion 47 is provided in a first end portion 46A (a first rotor 42-side end portion; a right end portion in FIG. 4) of the main shaft portion 46 so as to be integrated with the main shaft portion 46, and has a diameter larger than that of the main shaft portion 46. The transmission shaft 41 and the output shaft 130 of the electric motor 23 are connected to each other via the coupling 200 so as to be rotatable together, as has been described above. As described later, the transmission shaft 41 transmits the rotational driving force of the electric motor 23 to the shift conversion mechanism 24 and the select conversion mechanism 25, at the large diameter portion 47 which is opposite to the electric motor 23-side (the output shaft 130-side).

The first rotor 42 is disposed at a side (the right side in FIG. 4) opposite to the electric motor 23-side across the transmission shaft 41. The first rotor 42 includes a first armature hub 54 projecting outwardly in a radial direction from an outer periphery of an axial end portion (a left end portion in FIG. 4) of the first rotor 42 at the electric motor 23-side. The first armature hub 54 is disposed opposed to a surface (a right surface in FIG. 4) of the large diameter portion 47, the surface being opposite to the electric motor 23-side.

The second rotor 44 is disposed at a side opposite to the first rotor 42 across the large diameter portion 47 of the transmission shaft 41, that is, at the electric motor 23-side (the left side in FIG. 4), and surrounds the main shaft portion 46 of the transmission shaft 41 in a non-contact manner. The second rotor 44 includes a second armature hub 55 projecting outwardly in a radial direction from an outer periphery of an axial end portion (a right end portion in FIG. 4) of the second rotor 44 at a side opposite to the electric motor 23-side. The second armature hub 55 is disposed opposed to a surface (a left surface in FIG. 4) of the large diameter portion 47 at the electric motor 23-side. In other words, the first rotor 42 (the first armature hub 54 thereof) and the second rotor 44 (the second armature hub 55 thereof) are disposed so that the large diameter portion 47 of the transmission shaft 41 is sandwiched between the first rotor 42 (the first armature hub 54 thereof) and the second rotor 44 (the second armature hub 55 thereof). In this state, the first rotor 42, the second rotor 44, and the transmission shaft 41 are disposed coaxially, and each of them is rotatable around an axis thereof.

The clutch mechanism 39 includes a shift electromagnetic clutch 43 and a select electromagnetic clutch 45. The shift electromagnetic clutch 43 is intermittently connected to the first rotor 42 so as to connect/disconnect the transmission shaft 41 to/from the first rotor 42. The select electromagnetic clutch 45 is intermittently connected to the second rotor 44 so as to connect/disconnect the transmission shaft 41 to/from the second rotor 44. The shift electromagnetic clutch 43 transmits the rotational driving force from the electric motor 23 to the first rotor 42 so as to rotate the first rotor 42. The select electromagnetic clutch 45 transmits the rotational driving force from the electric motor 23 to the second rotor 44 so as to rotate the second rotor 44.

The shift electromagnetic clutch 43 includes a first field 48 and a first armature 49. The first armature 49 is provided on a surface at the other side (a right surface in FIG. 4) of the large diameter portion 47 of the transmission shaft 41 in the axial direction. The first armature 49 is disposed at a small distance from a surface (a left surface in FIG. 4) of the first armature hub 54 at the electric motor 23-side. The first armature 49 has a substantially annular disc shape coaxial with the transmission shaft 41. The first armature 49 is a rotor that rotates together with the transmission shaft 41 (the large diameter portion 47). The first armature 49 is formed by using a ferromagnet such as iron. The first field 48 is an annular body including an annular holder 170, an annular bobbin 31, and a first electromagnetic coil 50. The holder 170 has a U-shaped section that is laterally inclined when viewed in a circumferential direction. The bobbin 31 is accommodated in the holder 170 and has a U-shaped section when viewed in the circumferential direction. The first electromagnetic coil 50 is provided in the bobbin 31 (inside the U-shape). An outer peripheral surface of the holder 170 is fixed to an inner peripheral surface of the body housing 22, and thus, the first field 48 is fixed to the body housing 22. An annular rolling bearing 154 is fitted in an inner peripheral surface of the holder 170. An outer ring of the rolling bearing 154 is fixed (fitted) to the inner peripheral surface of the holder 170, and an inner ring of the rolling bearing 154 is fixed (fitted) to an outer periphery of the first rotor 42. Thus, the holder 170 supports the first rotor 42 so that the first rotor 42 is rotatable.

The select electromagnetic clutch 45 includes a second field 51 and a second armature 52. The second armature 52 is provided on a surface at the one side (a left surface in FIG. 4) of the large diameter portion 47 of the transmission shaft 41 in the axial direction. The second armature 52 is disposed at a small distance from a surface (a right surface in FIG. 4) of the second armature hub 55, the surface being opposite to the electric motor 23-side. The second armature 52 has a substantially annular disc shape coaxial with the transmission shaft 41. The second armature 52 is a rotor that rotates together with the transmission shaft 41 (the large diameter portion 47). The second armature 52 is formed by using a ferromagnet such as iron. The second field 51 is an annular body including an annular holder 171, an annular bobbin 32, and a second electromagnetic coil 53. The holder 171 has a U-shaped section that is laterally inclined when viewed in the circumferential direction. The bobbin 32 is accommodated in the holder 171 and has a U-shaped section when viewed in the circumferential direction. The second electromagnetic coil 53 is provided in the bobbin 32 (inside the U-shape). An outer peripheral surface of the holder 171 is fixed to the inner peripheral surface of the body housing 22, and thus, the second field 51 is fixed to the body housing 22. An annular rolling bearing 155 is fitted in an inner peripheral surface of the holder 171. An outer ring of the rolling bearing 155 is fixed (fitted) to the inner peripheral surface of the holder 171, and an inner ring of the rolling bearing 155 is fixed (fitted) to an outer periphery of the second rotor 44. Thus, the holder 171 supports the second rotor 44 so that the second rotor 44 is rotatable.

The first field 48 and the second field 51 are arranged in the axial direction (a direction in which central axes of the first rotor 42, the second rotor 44, and the transmission shaft 41 extend; the right-left direction in FIG. 4) so that the large diameter portion 47, the first armature hub 54, and the second armature hub 55 are sandwiched between the first field 48 and the second field 51. A clutch driving circuit (not shown) for driving the shift electromagnetic clutch 43 and the select electromagnetic clutch 45 is connected to the clutch mechanism 39. In relation to the clutch driving circuit, an Electronic Control Unit (ECU) 88 and a control lever 93 are provided. The ECU 88 performs driving control on the electric motor 23 via a motor driver (not shown) or performs driving control on the shift electromagnetic clutch 43 and the select electromagnetic clutch 45 via the clutch driving circuit, on the basis of an automatic gear shifting instruction according to a predetermined program, an operation of the control lever 93 by an operator (a driver), a detection result (a rotation angle of the output shaft 130) input from the resolver 160, and the like. Note that, in FIG. 4, a signal output from the ECU 88 and a signal input into the ECU 88 are illustrated by broken line arrows. Further, the ECU 88 may be fixed to a vehicle body or may be accommodated in the gear housing 7 (see FIG. 1).

Further, a voltage is supplied (fed) to the aforementioned clutch driving circuit from a power source (e.g., 24V, not shown) via wiring or the like. The clutch driving circuit has a configuration including a relay circuit and so on. The clutch driving circuit is provided so as to switch between power feeding and feeding stop with respect to each of the shift electromagnetic clutch 43 and the select electromagnetic clutch 45, separately (i.e., the clutch driving circuit is provided so as to allow or stop power feeding to each of the shift electromagnetic clutch 43 and the select electromagnetic clutch 45, separately). Note that the clutch driving circuit is not limited to the configuration for driving both of the shift electromagnetic clutch 43 and the select electromagnetic clutch 45. A clutch driving circuit for driving the shift electromagnetic clutch 43, and a clutch driving circuit for driving the select electromagnetic clutch 45 may be provided, separately.

When an electric current is applied to the first electromagnetic coil 50 by power feeding to the shift electromagnetic clutch 43 by the clutch driving circuit, the first electromagnetic coil 50 is brought into an excitation state, and thus, an electromagnetic suction force occurs in the first field 48 including the first electromagnetic coil 50. The first armature 49 is sucked by the first field 48 to be deformed toward the first field 48, and makes frictional contact with the first armature hub 54. Consequently, the application of the electric current to the first electromagnetic coil 50 causes the large diameter portion 47 (of the transmission shaft 41) at the first armature 49-side to be connected to the first armature hub 54 (the first rotor 42), and thus, the transmission shaft 41 is connected to the first rotor 42. When voltage supply to the first electromagnetic coil 50 is stopped and no current flows into the first electromagnetic coil 50, the suction force applied to the first armature 49 disappears, and the first armature 49 returns to its original shape. Thus, the state of the shift electromagnetic clutch 43 is changed from a connection state to a disconnection state, and the transmission shaft 41 is released (disconnected) from the first rotor 42. That is, by switching between power feeding and feeding stop with respect to the first electromagnetic coil 50, it is possible to change the state of the shift electromagnetic clutch 43 between the connection state and the disconnection state. The shift electromagnetic clutch 43 in the connection state is able to transmit the rotational driving force from the electric motor 23, to the shift conversion mechanism 24 via the transmission shaft 41. The shift electromagnetic clutch 43 in the disconnection state is able to block the rotational driving force so that the rotational driving force is not transmitted to the shift conversion mechanism 24 via the transmission shaft 41.

On the other hand, when an electric current is applied to the second electromagnetic coil 53 by power feeding to the select electromagnetic clutch 45 by the clutch driving circuit, the second electromagnetic coil 53 is brought into an excitation state, and thus, an electromagnetic suction force occurs in the second field 51 including the second electromagnetic coil 53. The second armature 52 is sucked by the second field 51 to be deformed toward the second field 51, and the second armature 52 makes frictional contact with the second armature hub 55. Consequently, the application of the electric current to the second electromagnetic coil 53 causes the large diameter portion 47 (of the transmission shaft 41) at the second armature 52-side to be connected to the second armature hub 55 (the second rotor 44), and thus, the transmission shaft 41 is connected to the second rotor 44. When voltage supply to the second electromagnetic coil 53 is stopped and no current flows into the second electromagnetic coil 53, the suction force applied to the second armature 52 disappears, and the second armature 52 returns to its original shape. Thus, the select electromagnetic clutch 45 is changed from a connection state to a disconnection state, and the transmission shaft 41 is released (disconnected) from the second rotor 44. That is, by switching between power feeding and feeding stop with respect to the second electromagnetic coil 53, it is possible to change the state of the select electromagnetic clutch 45 between the connection state and the disconnection state. The select electromagnetic clutch 45 in the connection state is able to transmit the rotational driving force from the electric motor 23, to the select conversion mechanism 25 via the transmission shaft 41. The select electromagnetic clutch 45 in the disconnection state is able to block the rotational driving force so that the rotational driving force is not transmitted to the select conversion mechanism 25 via the transmission shaft 41.

In control of the electric actuator 21, only either one of the shift electromagnetic clutch 43 and the select electromagnetic clutch 45 is selectively connected, in general. That is, when the shift electromagnetic clutch 43 is in the connection state, the select electromagnetic clutch 45 is in the disconnection state, and when the select electromagnetic clutch 45 is in the connection state, the shift electromagnetic clutch 43 is in the disconnection state.

An annular first gear wheel 56 having a small diameter is fitted and fixed to an outer periphery of the second rotor 44. The first gear wheel 56 is provided coaxially with the second rotor 44. The first gear wheel 56 is supported by a rolling bearing 57. An outer ring of the rolling bearing 57 is fitted and fixed to an inner periphery of the first gear wheel 56. An inner ring of the rolling bearing 57 is fitted and fixed to an outer periphery of the main shaft portion 46 of the transmission shaft 41. The shift conversion mechanism 24 mainly includes a ball screw mechanism 58, a nut 59, and an arm 60. The ball screw mechanism 58 is a speed reducer for converting a rotational motion into a linear motion. The nut 59 is included in the ball screw mechanism 58. The arm 60 pivots around the central axis 17 of the shift select shaft 15 in association with axial movement of the nut 59.

The ball screw mechanism 58 includes a screw thread shaft 61 and the nut 59. The screw thread shaft 61 extends coaxially with the first rotor 42 (that is, coaxially with the transmission shaft 41). The nut 59 is screwed to the screw thread shaft 61 via a ball (not shown). The screw thread shaft 61 is neither parallel to nor directly intersecting with the shift select shaft 15 such that the screw thread shaft 61 and the shift select shaft 15 form an angle of 90° in a plane view when viewed from above in FIG. 4. In other words, when viewed from a direction orthogonal to both an axial direction of the screw thread shaft 61 and the axial direction M4 of the shift select shaft 15 (when viewed from above in FIG. 4), the screw thread shaft 61 and the shift select shaft 15 are orthogonal to each other.

The screw thread shaft 61 is supported by rolling bearings 64 and 67, while movement of the screw thread shaft 61 in the axial direction is restricted by the rolling bearings 64 and 67. More specifically, one end portion (a left end portion in FIG. 4) of the screw thread shaft 61 is supported by the rolling bearing 64. Further, the other end portion (a right end portion in FIG. 4) of the screw thread shaft 61 is supported by the rolling bearing 67. The screw thread shaft 61 is supported by the rolling bearings 64 and 67 so as to be rotatable around a central axis 80 thereof (see FIG. 5).

An inner ring of the rolling bearing 64 is fitted to an outer periphery of the one end portion of the screw thread shaft 61. Further, an outer ring of the rolling bearing 64 is fixed to the body housing 22. Further, a lock nut 66 engages with the outer ring of the rolling bearing 64, and thus, the movement of the rolling bearing 64 toward the other side (toward the right side in FIG. 4) in the axial direction of the screw thread shaft 61 is restricted. The part of the one end portion of the screw thread shaft 61, which is closer to the electric motor 23-side (the left side in FIG. 4) than the rolling bearing 64, is inserted in an inner periphery of the first rotor 42 and connected to the first rotor 42 so as to be rotatable in association with the first rotor 42. An inner ring of the rolling bearing 67 is fitted to an outer periphery of the other end portion of the screw thread shaft 61. An outer ring of the rolling bearing 67 is fixed to the body housing 22.

On one side surface (a near side surface in FIG. 4; a left side surface in FIG. 5) of the nut 59 and on the other side surface thereof (a back side surface in FIG. 4; a right side surface in FIG. 5) opposite to the one side surface, respective columnar projecting shafts 70 (only one of them is illustrated in FIG. 4; see FIG. 5, too) extending in a direction (the direction orthogonal to the plane of paper in FIG. 4) along the axial direction M4 of the shift select shaft 15 are formed in a projecting manner. The paired projecting shafts 70 are disposed coaxially (see FIG. 5). Rotation of the nut 59 around the screw thread shaft 61 is restricted by a first engagement portion 72 (which will be described later) of the arm 60. Consequently, when the screw thread shaft 61 is rotated, the nut 59 moves in the axial direction of the screw thread shaft 61 in association with the rotation of the screw thread shaft 61. Note that FIG. 5 illustrates a sectional state of the nut 59 and the arm 60 when the nut 59 is disposed at a position moved in a direction away from the first rotor 42 (a direction toward the right side in FIG. 4) with respect to the axial direction of the screw thread shaft 61, compared with a position of the nut 59 in FIG. 4.

As illustrated in FIGS. 4 and 5, the arm 60 includes the first engagement portion 72, a second engagement portion 73 (see FIG. 5), and a linear connecting rod 74. The first engagement portion 72 engages with the nut 59. The second engagement portion 73 (see FIG. 5) is spline-fitted to the spline portion 120 of the shift select shaft 15. The connecting rod 74 connects the first engagement portion 72 to the second engagement portion 73. The sectional shape of the connecting rod 74 over the entire length thereof is, for example, rectangular. The second engagement portion 73 has a ring (annular) shape and is fitted to an outer periphery of the spline portion 120 of the shift select shaft 15. Splines 75 are formed on an inner peripheral surface of the second engagement portion 73, and the splines 75 of the second engagement portion 73 mesh with the splines 121 of the spline portion 120, and thus, the second engagement portion 73 and the spline portion 120 are spline-fitted to each other. Note that the second engagement portion 73 has an annular disc shape, but may have a cylindrical shape (a shape having a predetermined thickness in the axial direction).

The first engagement portion 72 includes paired support plate portions 76 (in FIG. 4, only one support plate portion 76 is illustrated), and a connecting plate portion 77. The paired support plate portions 76 are opposed to each other. The connecting plate portion 77 connects proximal end sides of the paired support plate portions 76 to each other. The first engagement portion 72 has a substantially U-shape in a side view. Each of the support plate portions 76 includes a U-shaped engagement groove 78 that engages with an outer periphery of a corresponding one of the projecting shafts 70 while allowing the rotation of the projecting shaft 70. The U-shaped engagement groove 78 is formed by cutout from a distal end side (an upper end side in FIGS. 4 and 5) of the support plate portion 76, the distal end side being opposite to the proximal end side. Accordingly, the first engagement portion 72 engages with the nut 59 so as to be rotatable around the projecting shaft 70 relative to the nut 59 and movable together with the nut 59 in the axial direction of the screw thread shaft 61. Further, since each of the U-shaped engagement grooves 78 engages with a corresponding one of the projecting shafts 70, the rotation of the nut 59 around the screw thread shaft 61 is restricted by the first engagement portion 72 of the arm 60. Consequently, when the screw thread shaft 61 is rotated, the nut 59 and the first engagement portion 72 move in the axial direction of the screw thread shaft 61.

As described above, the outer periphery of the spline portion 120 of the shift select shaft 15 is spline-fitted to an inner periphery of the second engagement portion 73. More specifically, the splines 121 provided on the outer periphery of the spline portion 120 mesh with the splines 75 provided on the inner periphery of the second engagement portion 73. At this time, a clearance for meshing is secured between the splines 121 and the splines 75. In other words, the second engagement portion 73 is connected to the outer periphery of the spline portion 120 of the shift select shaft 15 in a state where the second engagement portion 73 is non-rotatable relative to the shift select shaft 15 and is allowed to move axially relative to the shift select shaft 15. Thus, when the shift electromagnetic clutch 43 is in the connection state, the screw thread shaft 61 rotates, and accordingly the nut 59 moves in the axial direction of the screw thread shaft 61, the arm 60 pivots around the central axis 17 of the shift select shaft 15 and the shift select shaft 15 rotates around the central axis 17 in association with oscillation of the arm 60. That is, when the spline portion 120 receives the rotational driving force of the electric motor 23 from the second engagement portion 73, the shift select shaft 15 rotates around the axis thereof. Thus, the aforementioned shift operation is achieved.

As illustrated in FIG. 4, the select conversion mechanism 25 includes the aforementioned first gear wheel 56, a pinion shaft 95, a second gear wheel 81, and a pinion gear 36 having a small diameter. The pinion shaft 95 is provided so as to be rotatable in a state where the pinion shaft 95 extends in parallel with the transmission shaft 41. The second gear wheel 81 is coaxially fixed at a predetermined position close to one end portion (a left end portion in FIG. 4) of the pinion shaft 95, and meshes with the first gear wheel 56. The pinion gear 36 is coaxially fixed at a predetermined position close to the other end portion (a right end portion in FIG. 4) of the pinion shaft 95. As a whole, the select conversion mechanism 25 constitutes a speed reducer. Note that the second gear wheel 81 is formed to have a diameter larger than those of the first gear wheel 56 and the pinion gear 36.

The one end portion (the left end portion in FIG. 4) of the pinion shaft 95 is supported by a rolling bearing 96 fixed to the body housing 22. An inner ring of the rolling bearing 96 is fitted to an outer periphery of the one end portion (the left end portion in FIG. 4) of the pinion shaft 95. Further, an outer ring of the rolling bearing 96 is fixed within a cylindrical recessed portion 97 formed on an inner surface of the cover 27. Further, the other end portion (the right end portion in FIG. 4) of the pinion shaft 95 is supported by a rolling bearing 84. Since the pinion gear 36 meshes with the rack portion 122 (see FIG. 5) according to a rack-and-pinion mechanism, when the select electromagnetic clutch 45 is in the connection state and the pinion shaft 95 rotates in association with the rotation of the transmission shaft 41, the shift select shaft 15 moves in the axial direction M4 (see FIG. 1) accordingly. That is, when the rack portion 122 receives a driving force of the electric motor 23 from the pinion gear 36, the shift select shaft 15 slides in the axial direction. Thus, the aforementioned select operation is achieved. Note that even if the shift select shaft 15 slides, the spline-fitting between the second engagement portion 73 and the spline portion 120 is maintained.

With reference to FIG. 2, the aforementioned body housing 22 includes a first body housing 22A and a second body housing 22B. Note that the first body housing 22A is integrated with the second body housing 22B, and there is no clearance in a seam between these housings. Therefore, the inside and outside of the body housing 22 do not communicate with each other through the seam between the first body housing 22A and the second body housing 22B.

The first body housing 22A has a box shape, that is, a shape of a substantially rectangular solid constituting a right side portion of the body housing 22 in FIG. 2, and mainly accommodates therein the shift select shaft 15, the ball screw mechanism 58, the arm 60, and the pinion gear 36 (see FIG. 4). The first body housing 22A is defined by the aforementioned bottom wall 111, the side wall 112, the side wall 113, the cover 114 (see FIG. 5), and so on.

The second body housing 22B has a hollow-cylinder shape extending from the first body housing 22A in a direction (leftward in FIG. 2) orthogonal to the shift select shaft 15 in a plane view. The aforementioned motor opening 13 is formed on an end surface of the second body housing 22B, the end surface being opposite to the first body housing 22A. The electric motor 23 (the motor housing 133) is fitted to the end surface via the cover 27 (see FIG. 4). Referring to FIG. 4, the second body housing 22B accommodates therein the aforementioned switching unit 26, the second gear wheel 81, and the like.

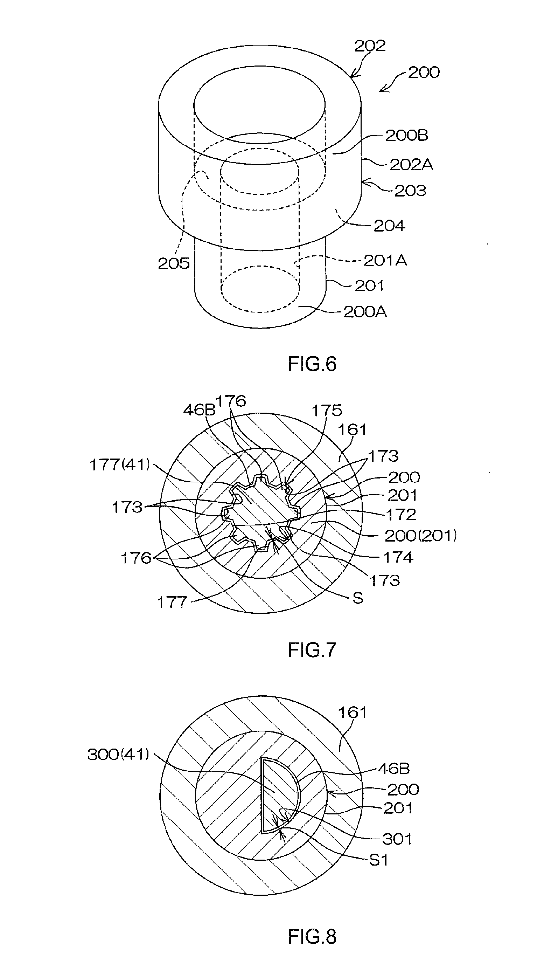

FIG. 6 is a perspective view illustrating a configuration of the coupling 200. The coupling 200 coaxially and integrally includes the transmission shaft-side cylindrical portion 201, an output shaft-side cylindrical portion (a first cylindrical portion) 202, and a shaft body 203 having a solid columnar shape. The transmission shaft-side cylindrical portion 201 is connected to the transmission shaft 41. The output shaft-side cylindrical portion (the first cylindrical portion) 202 is connected to the output shaft 130. The shaft body 203 connects the transmission shaft-side cylindrical portion 201 to the output shaft-side cylindrical portion 202. An inside diameter and an outside diameter of the transmission shaft-side cylindrical portion 201 are set to be smaller than an inside diameter and an outside diameter of the output shaft-side cylindrical portion 202, respectively. An outer peripheral surface of the shaft body 203 has the same circumferential surface as an outer peripheral surface 202A of the output shaft-side cylindrical portion 202. An inner peripheral surface of the shaft body 203 has the same circumferential surface as an inner peripheral surface 201A of the transmission shaft-side cylindrical portion 201. In other words, the outer peripheral surface of the shaft body 203 is connected to an outer peripheral surface of the transmission shaft-side cylindrical portion 201 by a first stepped portion 204 constituted by a flat annular surface. Further, the inner peripheral surface of the shaft body 203 is connected to an inner peripheral surface of the output shaft-side cylindrical portion 202 by a second stepped portion 205 constituted by a flat annular surface.

FIG. 7 is a sectional view taken along a line B-B of FIG. 4. Hereinafter, fitting of the coupling 200 with the output shaft 130, the transmission shaft 41, and the resolver rotor 161 will be described with reference to FIGS. 4, 6, and 7. The output shaft-side cylindrical portion 202 is formed in an area including a second end portion 200B of the coupling 200 (an output shaft-side end portion of the shaft joint). In a state where the coupling 200 is fitted to the output shaft 130, the output shaft-side cylindrical portion 202 is positioned coaxially with the output shaft 130. The distal end portion 130A of the output shaft 130 is inserted into an inner periphery of the output shaft-side cylindrical portion 202 by press-fitting.

On the other hand, a spline portion 177 formed in the second end portion (the output shaft-side end portion) 46B of the main shaft portion 46 is spline-fitted to an inner periphery of the transmission shaft-side cylindrical portion 201. A female spline 174 having a plurality of spline grooves 173 is formed on the inner periphery of the transmission shaft-side cylindrical portion 201. Note that the female spline 174 may be provided not only on the inner periphery of the transmission shaft-side cylindrical portion 201 but also over an inner periphery of the shaft body 203.

The spline portion 177 includes a male spline 175 formed on an outer periphery of the second end portion 46B. The male spline 175 has spline teeth 176 meshing with the spline grooves 173. In a state where a recessed portion 172 is spline-fitted to the spline portion 177, a clearance S is formed between the outer periphery of the second end portion 46B and an inner periphery of the recessed portion 172. Since the transmission shaft-side cylindrical portion 201 is fitted to the main shaft portion 46 of the transmission shaft 41 by clearance fit, no deformation is caused in the transmission shaft-side cylindrical portion 201 by insertion of the main shaft portion 46. Note that, in FIG. 4, the spline portion 177 is provided in a reduced-diameter portion that is thinner (reduced in diameter) than the main shaft portion 46, but may be provided in a portion that is not reduced in diameter.

Further, the resolver rotor 161 is fitted and fixed to the outer periphery of the transmission shaft-side cylindrical portion 201 by press-fitting. In this state, the resolver rotor 161 completely overlaps with the coupling 200 with respect to the axial direction of the transmission shaft 41 and the output shaft 130. In view of this, according to the present embodiment, the resolver rotor 161 is fitted to the outer periphery of the transmission shaft-side cylindrical portion 201. Since the resolver rotor 161 completely overlaps with the coupling 200 with respect to the axial direction of the output shaft 130 and the transmission shaft 41, it is possible to reduce an overall dimension of the electric actuator 21 by overlapping of the resolver rotor 161 with the coupling 200. As a result, it is possible to reduce the size of the electric actuator 21. Further, since the resolver rotor 161 is fitted to the coupling 200 that rotates in association with the output shaft 130, it is possible to detect a rotation angle of the output shaft 130 by the resolver 160 appropriately.

Since the distal end portion 130A of the output shaft 130 is press-fitted into the output shaft-side cylindrical portion 202, there is a possibility that the output shaft-side cylindrical portion 202 may be deformed due to the press-fitting of the output shaft 130. On the other hand, since the transmission shaft-side cylindrical portion 201 is fitted to the output shaft 130 by clearance fit, no deformation is caused in the transmission shaft-side cylindrical portion 201. That is, the resolver rotor 161 is disposed in that area of the coupling 200 which is hardly deformed. This makes it possible to maintain good detection accuracy of the resolver 160. Thus, it is possible to reduce the size of the electric actuator 21 without decreasing the detection accuracy of the resolver 160.

The embodiment of this invention has been described above, but the invention may be implemented according to other embodiments. For example, the configuration in which the transmission shaft 41 is spline-fitted to the coupling 200 has been described as an example, but it is also possible to employ a fitting structure as illustrated in FIG. 7, instead of such a spline fitting structure. In this fitting structure, a second end portion 46B of a main shaft portion 46 is constituted by a D-shaped portion 300 having a semicircular section (the second end portion 46B of the main shaft portion 46 is formed in a D-cut shape). Further, an insertion groove 301 having a semicircular section is formed on an inner periphery of a transmission shaft-side cylindrical portion 201 of a coupling 200. When the D-shaped portion 300 is inserted into an inner periphery of the coupling 200, it is possible to connect the coupling 200 to a transmission shaft 41 so that the coupling 200 is rotatable together with the transmission shaft 41. Note that, in this state, a clearance S1 is formed between an inner periphery of the insertion groove 301 and an outer periphery of the D-shaped portion 300 (the D-shaped portion 300 is fitted by clearance fit). Accordingly, no deformation is caused in the transmission shaft-side cylindrical portion 201 after insertion of the D-shaped portion 300.

Note that in the aforementioned embodiment, the case where the entire resolver rotor 161 overlaps with the coupling 200 with respect to the axial direction of the transmission shaft 41 and the output shaft 130 has been described as an example. However, the configuration may be such that only a part of the resolver rotor 161 overlaps with the coupling 200. Further, in the aforementioned embodiment, the case where the present invention is applied to the electric actuator 21 for causing the shift lever 16 to perform both the shift operation and the select operation has been described as an example. However, the present invention may be applied to an electric actuator for causing the shift lever 16 to perform only the shift operation or an electric actuator for causing the shift lever 16 to perform only the select operation. In this case, if a driving force output portion is a shaft-shaped body, a driving force from the driving force output portion may be output by rotation of the shaft-shaped body around an axis thereof, or the driving force may be output by movement of the shaft-shaped body in an axial direction thereof.

Further, the present invention is not limited to an electric actuator used for shifting gears, and the present invention is also widely applicable to electric actuators for various purposes of use, including, for example, an electric actuator for an electric parking brake, an electric actuator for an electric disc brake, an electric actuator for a valve-timing variable mechanism of an engine, and the like.

In addition to that, various modifications in design may be made within a scope of matters described in claims.

## Claims

1. An electric actuator comprising:
an electric motor that includes an output shaft, a motor rotor, and a motor stator, the motor rotor including a back yoke and a magnet fitted to an outer peripheral surface of the back yoke, the motor rotor being fitted to an outer periphery of the output shaft, the motor stator surrounding the motor rotor, and the electric motor generating a rotational driving force to output the rotational driving force from the output shaft;
a transmission mechanism that transmits the rotational driving force generated by the electric motor to a driving force output portion;
a transmission shaft that is provided coaxially with the output shaft, and that transmits the rotational driving force to the transmission mechanism;
a shaft joint that includes a cylindrical portion provided coaxially with the output shaft and the transmission shaft, the shaft joint connecting the output shaft to the transmission shaft so that the output shaft and the transmission shaft are rotatable together; and
a resolver that includes a resolver rotor fitted to an outer periphery of the cylindrical portion, and that detects a rotation angle of the output shaft.

2. The electric actuator according to claim 1, wherein:
the cylindrical portion includes a first cylindrical portion which is formed in an area including an output shaft-side end portion of the shaft joint, and into which a distal end portion of the output shaft is press-fitted; and
the resolver rotor is disposed in an area other than the first cylindrical portion, in the cylindrical portion.

3. The electric actuator according to claim 1 or 2, wherein:
the cylindrical portion includes a second cylindrical portion which is formed in an area including a transmission shaft-side end portion of the shaft joint, and into which an output shaft-side end portion of the transmission shaft is inserted; and
the resolver rotor is disposed in the second cylindrical portion.

4. The electric actuator according to claim 3, wherein
an inner periphery of the second cylindrical portion is fitted to the output shaft-side end portion of the transmission shaft by clearance fit.

5. The electric actuator according to claim 4, wherein
the inner periphery of the second cylindrical portion is spline-fitted to the output shaft-side end portion of the transmission shaft.

6. The electric actuator according to claim 4, wherein:
the output shaft-side end portion of the transmission shaft has a semicircular section;
an insertion groove having a semicircular section is formed on the inner periphery of the second cylindrical portion; and
the output shaft-side end portion of the transmission shaft is inserted into the insertion groove.

7. The electric actuator according to any one of claims 3 to 6, wherein
an inner periphery of the resolver rotor is press-fitted to an outer periphery of the second cylindrical portion.

8. The electric actuator according to any one of claims 1 to 7, wherein:
the driving force output portion includes a shift select shaft to which a shift lever is connected;
the electric actuator rotates the shift select shaft around an axis thereof so as to cause the shift lever to perform a shift operation, and moves the shift select shaft in an axial direction so as to cause the shift lever to perform a select operation; and
the transmission mechanism includes a shift conversion mechanism that converts the rotational driving force generated by the electric motor to a force for rotating the shift select shaft around the axis and transmits the force to the shift select shaft, and a select conversion mechanism that converts the rotational driving force generated by the electric motor to a force for moving the shift select shaft in the axial direction and transmits the force to the shift select shaft.
